# EUROPÄISCHE PATENTSCHRIFT

(11) **EP 4 460 699 B1**
(45) Veröffentlichungstag und Bekanntmachung des Hinweises auf die Patenterteilung: **03.12.2025**
(21) Anmeldenummer: 22700058.5
(22) Anmeldetag: 04.01.2022
(51) Int. Cl.: G01P 3/481, G01D 5/14, G01P 3/50

(54) **SENSORVORRICHTUNG ZUR ERFASSUNG EINES MAGNETFELDS SOWIE MAGNETBASIERTES SENSORSYSTEM ZUR ERFASSUNG EINER BEWEGUNG EINES BEWEGLICHEN OBJEKTS**
SENSOR DEVICE FOR DETECTING A MAGNETIC FIELD, AND MAGNET-BASED SENSOR SYSTEM FOR DETECTING A MOVEMENT OF A MOVABLE OBJECT
DISPOSITIF DE CAPTEUR POUR DÉTECTER UN CHAMP MAGNÉTIQUE, ET SYSTÈME DE CAPTEURS À BASE D'AIMANTS POUR DÉTECTER UN MOUVEMENT D'UN OBJET MOBILE

(43) Veröffentlichungstag der Anmeldung: 13.11.2024
(73) Patentinhaber: Fraba B.V., 6416 SG Heerlen (NL)
(72) Erfinder: HÜNING, Felix, 52066 Aachen (DE)
(74) Vertreter: terpatent PartGmbB
(86) Internationale Anmeldenummer: PCT/EP2022/050076
(87) Internationale Veröffentlichungsnummer: WO 2023/131396

(56) Entgegenhaltungen:
- DE-A1- 19 925 884
- US-A- 4 639 670

## Beschreibung

Die vorliegende Erfindung betrifft eine Sensorvorrichtung zur Erfassung eines Magnetfelds mit einer Wiegand-Sensoreinheit umfassend: mindestens zwei Wiegand-Drähte sowie eine Spulenanordnung, die die mindestens zwei Wiegand-Drähte radial umschließt. Die vorliegende Erfindung betrifft ferner magnetbasierte Sensorsysteme mit einer derartigen Sensorvorrichtung und einer Erregervorrichtung mit mindestens einem Erregermagnet zur Erzeugung eines Erregermagnetfelds, wobei entweder die Sensorvorrichtung oder die Erregervorrichtung eingerichtet ist, mit dem beweglichen Objekt verbunden zu werden, um sich mit diesem mitzubewegen, und die jeweils andere eingerichtet ist, feststehend angeordnet zu werden.

Derartige Sensorsysteme sind beispielsweise Drehwinkelmesssysteme zur Erfassung der Drehbewegung einer Welle. Typischerweise ist hierbei die Erregervorrichtung an der Welle befestigt und die Sensorvorrichtung feststehend angeordnet, wobei das von der Erregervorrichtung erzeugte Erregermagnetfeld von der Wiegand-Sensoreinheit der Sensorvorrichtung erfasst wird. Hierfür weist die Wiegand-Sensoreinheit mindestens zwei Wiegand-Drähte auf, deren Magnetisierungsrichtung unter Einwirkung eines externen Magnetfelds schlagartig umklappt, sobald eine spezifische Triggerfeldstärke überschritten wird. Hierdurch wird in der Spulenanordnung, die die mindestens zwei Wiegand-Drähte radial umschließt, jeweils ein kurzer Spannungspuls, auch als Wiegand-Puls bezeichnet, erzeugt. Dieser Effekt wird als Wiegand-Effekt bezeichnet und ist aus dem Stand der Technik hinlänglich bekannt.

Wiegand-Drähte im Sinne der vorliegenden Anmeldung werden auch als Impulsdrähte bezeichnet und weisen im Allgemeinen einen hartmagnetischen Mantel und einen weichmagnetischen Kern oder umgekehrt auf. Das Umklappen der Magnetisierungsrichtung eines Wiegand-Drahts wird nachfolgend auch als "Auslösen" des Wiegand-Drahts bezeichnet.

Die in der Spulenanordnung erzeugten Spannungspulse können von einer Folgeelektronik ausgewertet werden, um beispielsweise basierend auf Anzahl und/oder Frequenz der Spannungspulse einen (inkrementellen) Drehwinkel und/oder eine Drehgeschwindigkeit der Welle zu bestimmen. Die elektrische Energie der erzeugten Spannungspulse ist hierbei ausreichend, um zumindest den Betrieb einer relativ simplen Folgeelektronik ohne externe Energieversorgung zu ermöglichen. Die durch die Wiegand-Sensoreinheit erzeugte elektrische Energie ist hierbei umso höher, je mehr Wiegand-Drähte die Wiegand-Sensoreinheit aufweist.

Herstellungsbedingt weisen die einzelnen Wiegand-Drähte jedoch im Allgemeinen unterschiedliche spezifische Triggerfeldstärken auf, sodass die Wiegand-Drähte bei unterschiedlichen lokalen Feldstärken des externen Magnetfelds und somit bei geringfügig unterschiedlichen Drehwinkelpositionen der Welle auslösen. Dies kann dazu führen, dass bei einer definierten Drehwinkelposition der Welle ein Teil der Wiegand-Drähte auslöst, während ein anderer Teil der Wiegand-Drähte nicht auslöst. Hierdurch können zum einen die Messergebnisse der Sensorvorrichtung verfälscht werden, zum anderen kann dies auch dazu führen, dass bei einer Sensorvorrichtung ohne externe Energieversorgung nicht genügend elektrische Energie für einen ordnungsgemäßen Betrieb der Folgeelektronik erzeugt wird.

Vor diesem Hintergrund ist aus der WO 2020/160766 A1 eine Sensorvorrichtung bekannt, bei der die Spulenanordnung der Wiegand-Sensoreinheit ein Sensorelement bildet, dessen elektrische Spannung zur Erfassung der Drehbewegung ausgewertet wird und zur Energieversorgung verwendet wird, und ein Triggerelement bildet, durch das ein zu dem externen Magnetfeld gleichgerichtetes Triggermagnetfeld erzeugt werden kann. Die offenbarte Sensorvorrichtung umfasst ferner einen Energiespeicher, der über ein Schaltelement bedarfsweise elektrisch mit dem Triggerelement verbunden werden kann. Die durch einen ersten Wiegand-Draht, der eine relativ geringe Triggerfeldstärke aufweist, in dem Sensorelement der Spulenanordnung erzeugte elektrische Energie wird in dem Energiespeicher zwischengespeichert und kann bei Bedarf zur Bestromung des Triggerelements der Spulenanordnung verwendet werden, um das Triggermagnetfeld zu erzeugen. Das Gesamtmagnetfeld - also die Summe aus externem Magnetfeld und Triggermagnetfeld - überschreitet dann die Triggerfeldstärke aller übrigen Wiegand-Drähte, sodass sichergestellt werden kann, dass alle Wiegand-Drähte der Wiegand-Sensoreinheit auslösen, sobald die Triggerfeldstärke mindestens eines Wiegand-Drahts überschritten ist. Zur gezielten Ansteuerung des Schaltelements ist jedoch eine relativ komplexe Steuerelektronik erforderlich, für deren Betrieb zusätzliche elektrische Energie benötigt wird und durch die die Herstellungskosten erhöht werden.

Weitere relevante Dokumente aus dem Stand der Technik sind DE 199 25 884 A1 und US 4 639 670 A.

Es stellt sich vor diesem Hintergrund die Aufgabe, ein magnetbasiertes Sensorsystem zur Erfassung einer Bewegung eines beweglichen Objekts zu ermöglichen, das ohne externe Energieversorgung zuverlässig sowie energieeffizient arbeitet und kostengünstig hergestellt werden kann.

Diese Aufgabe wird durch eine Sensorvorrichtung zur Erfassung eines Magnetfelds, mit den Merkmalen des Anspruchs 1, sowie durch ein magnetbasiertes Sensorsystem zur Erfassung einer Bewegung eines beweglichen Objekts in einer Bewegungsrichtung, mit den Merkmalen des Anspruchs 6, gelöst.

Die erfindungsgemäße Sensorvorrichtung umfasst eine Wiegand-Triggereinheit mit einem Wiegand-Draht und einer Sensorspule, die den Wiegand-Draht radial umschließt, wobei ein erstes Ende der Sensorspule der Wiegand-Triggereinheit mit einem ersten Ende des Triggerelements der Spulenanordnung der Wiegand-Sensoreinheit elektrisch verbunden ist und ein zweites Ende der Sensorspule der Wiegand-Triggereinheit mit einem zweiten Ende des Triggerelements der Spulenanordnung der Wiegand-Sensoreinheit elektrisch verbunden ist. Die Sensorspule der Wiegand-Triggereinheit und das Triggerelement der Spulenanordnung der Wiegand-Sensoreinheit sind also derart elektrisch miteinander verbunden, dass durch einen in der Sensorspule der Wiegand-Triggereinheit erzeugten Spannungspuls das Triggerelement der Spulenanordnung der Wiegand-Sensoreinheit bestromt wird.

Sobald der vorzugsweise exakt eine Wiegand-Draht der Wiegand-Triggereinheit unter Einwirkung des externen Magnetfelds auslöst, wird folglich das Triggerelement der Spulenanordnung bestromt und somit ein auf die mindestens zwei Wiegand-Drähte der Wiegand-Sensoreinheit einwirkendes Triggermagnetfeld erzeugt. Die Wiegand-Triggereinheit und das Triggerelement der Spulenanordnung der Wiegand-Sensoreinheit sind hierbei erfindungsgemäß derart ausgebildet, dass ein auf die mindestens zwei Wiegand-Drähte der Wiegand-Sensoreinheit einwirkendes Gesamtmagnetfeld die Triggerfeldstärke jedes einzelnen Wiegand-Drahts der Wiegand-Sensoreinheit überschreitet. Hierdurch ist sichergestellt, dass alle Wiegand-Drähte der Wiegand-Sensoreinheit im Wesentlichen zeitgleich auslösen. Hierdurch wird einerseits sichergestellt, dass die in dem Sensorelement der Spulenanordnung der Wiegand-Sensoreinheit erzeugten Spannungspulse zuverlässig auswertbar sind, und andererseits, dass durch die Wiegand-Sensoreinheit immer im Wesentlichen die gleiche elektrische Energie erzeugt wird. Dies schafft eine Sensorvorrichtung, die ohne externe Energieversorgung zuverlässig arbeitet.

Auf Grund der erfindungsgemäßen Wiegand-Triggereinheit ist für die Erzeugung des Triggermagnetfelds weder ein Schaltelement noch eine komplexe Steuereinheit zum Ansteuern des Schaltelements erforderlich. Dies schafft eine Sensorvorrichtung, die besonders energieeffizient arbeitet und ferner kostengünstig hergestellt werden kann.

Die erfindungsgemäße Sensorvorrichtung ermöglicht daher die Realisierung eines magnetbasierten Sensorsystems zur Erfassung einer Bewegung eines beweglichen Objekts, das ohne externe Energieversorgung zuverlässig sowie energieeffizient arbeitet und kostengünstig hergestellt werden kann.

In einer vorteilhaften Ausführung der erfindungsgemäßen Sensorvorrichtung umfasst die Spulenanordnung der Wiegand-Sensoreinheit eine Sensorspule, die die mindestens zwei Wiegand-Drähte radial umschließt und das Sensorelement bildet, sowie eine separate Triggerspule, die ebenfalls die mindestens zwei Wiegand-Drähte radial umschließt und das Triggerelement bildet. Die Sensorspule und die Triggerspule können hierbei unabhängig voneinander für die jeweilige Funktion, also die Erzeugung der Wiegand-Pulse einerseits und die Erzeugung des Triggermagnetfelds andererseits, optimiert werden. Dies ermöglicht eine Sensorvorrichtung, die besonders zuverlässig und energieeffizient arbeitet.

Vorzugsweise sind die Sensorspule und die Triggerspule der Spulenanordnung der Wiegand-Sensoreinheit bezogen auf eine axiale Richtung der mindestens zwei Wiegand-Drähte der Wiegand-Sensoreinheit nebeneinanderliegend angeordnet. Vorzugsweise weist die Triggerspule der Wiegand-Sensoreinheit hierbei eine kleinere Ausdehnung in axialer Richtung der mindestens zwei Wiegand-Drähte auf als die Sensorspule der Wiegand-Sensoreinheit. Auf Grund der nebeneinanderliegenden Anordnung der Sensorspule und der Triggerspule wird die Erzeugung der Spannungspulse in der Sensorspule beim Auslösen der mindestens zwei Wiegand-Drähte durch die Triggerspule nur minimal beeinflusst. Dies schafft eine Sensorvorrichtung, die besonders zuverlässig arbeitet.

In einer alternativen bevorzugten Ausführung sind die Sensorspule und die Triggerspule der Spulenanordnung der Wiegand-Sensoreinheit ineinander angeordnet. Hierbei kann die Sensorspule radial innerhalb der Triggerspule angeordnet sein, kann die Triggerspule radial innerhalb der Sensorspule angeordnet sein, oder können die Wicklungen der Triggerspule und die Wicklungen der Sensorspule bezogen auf die axiale Richtung ineinander ausgebildet sein, also "ineinander gewickelt" sein. Dies ermöglicht eine relativ kompakte Sensorvorrichtung.

In einer alternativen vorteilhaften Ausführung der erfindungsgemäßen Sensorvorrichtung umfasst die Spulenanordnung der Wiegand-Sensoreinheit nur eine einzige Kombispule, die die mindestens zwei Wiegand-Drähte radial umschließt und die sowohl das Sensorelement als auch das Triggerelement bildet. Dies ermöglicht eine besonders kompakte und kostengünstige Sensorvorrichtung. Ferner wird bei diesem Aufbau - im Vergleich zu einer Spulenanordnung mit einer Sensorspule und einer separaten Triggerspule - beim Auslösen der Wiegand-Drähte eine höhere elektrische Spannung und somit mehr elektrische Energie in dem Sensorelement der Spulenanordnung erzeugt.

Das erfindungsgemäße Sensorsystem umfasst eine Erregervorrichtung mit mindestens einem Erregermagnet zur Erzeugung eines Erregermagnetfelds sowie eine erfindungsgemäße Sensorvorrichtung wie zuvor beschrieben. Entweder die Erregervorrichtung oder die Sensorvorrichtung ist eingerichtet, mit dem beweglichen Objekt verbunden zu werden, um sich mit diesem mitzubewegen, und die jeweils andere ist eingerichtet, feststehend angeordnet zu werden, sodass sich das von der Erregervorrichtung an einer definierten Position der Sensorvorrichtung erzeugte Erregermagnetfeld mit der Bewegung des beweglichen Objekts ändert. Die Erregervorrichtung und die Sensorvorrichtung sind hierbei im Speziellen derart ausgebildet, dass sowohl an der Position der Wiegand-Triggereinheit der Sensorvorrichtung als auch an der Position der Wiegand-Sensoreinheit der Sensorvorrichtung bei einer kontinuierlichen Bewegung des beweglichen Objekts jeweils ein alternierendes Erregermagnetfeld erzeugt wird.

Erfindungsgemäß sind die die Wiegand-Triggereinheit und die Wiegand-Sensoreinheit der Sensorvorrichtung derart in der Bewegungsrichtung versetzt zueinander angeordnet, dass bei der Bewegung des beweglichen Objekts in der Bewegungsrichtung eine auf den Wiegand-Draht der Wiegand-Triggereinheit einwirkende Komponente des Erregermagnetfelds, also die zu dem Wiegand-Draht der Wiegand-Triggereinheit parallele Komponente des lokalen Erregermagnetfelds an der Position der Wiegand-Triggereinheit, eine definierte Triggerfeldstärke erreicht, bevor eine auf die mindestens zwei Wiegand-Drähte der Wiegand-Sensoreinheit einwirkende Komponente des Erregermagnetfelds, also die zu den mindestens zwei Wiegand-Drähten der Wiegand-Sensoreinheit parallele Komponente des lokalen Erregermagnetfelds an der Position der Wiegand-Sensoreinheit, die definierte Triggerfeldstärke erreicht. Beispielsweise kann die Wiegand-Triggereinheit in Bewegungsrichtung vor der Wiegand-Sensoreinheit angeordnet sein, sodass die Wiegand-Triggereinheit einen Erregermagnet der Erregervorrichtung jeweils vor der Wiegand-Sensoreinheit passiert. Wenn die Erregervorrichtung mehr als einen Erregermagnet aufweist, ist es jedoch auch vorstellbar, dass die Wiegand-Triggereinheit und die Wiegand-Sensoreinheit derart versetzt zueinander angeordnet sind, dass sie das lokale Erregermagnetfeld von verschiedenen Erregermagneten erfassen. In diesem Fall ist die Wiegand-Triggereinheit typischerweise derart versetzt zu der Wiegand-Sensoreinheit angeordnet, dass ein Versatz in Bewegungsrichtung zwischen der Wiegand-Triggereinheit und der Wiegand-Sensoreinheit größer als ein Versatz in Bewegungsrichtung zwischen den entsprechenden Erregermagneten ist, sodass die Wiegand-Triggereinheit den einen Erregermagnet passiert bevor die Wiegand-Sensoreinheit den entsprechenden anderen Erregermagnet passiert.

Durch die erfindungsgemäße Anordnung der Wiegand-Triggereinheit und der Wiegand-Sensoreinheit wird erreicht, dass das Triggermagnetfeld, welches durch das Bestromen des Triggerelements der Wiegand-Sensoreinheit mit der Energie des in der Sensorspule der Wiegand-Triggereinheit erzeugten Spannungspulses erzeugt wird, dann auf die mindestens zwei Wiegand-Drähte des Wiegand-Sensormoduls einwirkt, wenn die auf die mindestens zwei Wiegand-Drähte einwirkende Komponente des Erregermagnetfelds maximal ist. Hierdurch wird sichergestellt, dass alle Wiegand-Drähte des Wiegand-Sensormoduls im Wesentlichen zeitgleich auslösen, sodass die in dem Sensorelement der Spulenanordnung der Wiegand-Sensoreinheit erzeugten Spannungspulse zuverlässig auswertbar sind und immer im Wesentlichen die gleiche elektrische Energie aufweisen. Dies schafft ein Sensorsystem, das die Erfassung von Bewegungen des beweglichen Objekts in einer Bewegungsrichtungen ermöglicht, ohne externe Energieversorgung zuverlässig sowie energieeffizient arbeitet, und kostengünstig hergestellt werden kann.

Vorzugsweise ist das Sensorsystem zur Erfassung der Bewegung des beweglichen Objekts in einer weiteren Bewegungsrichtung eingerichtet. In diesem Fall umfasst die die Sensorvorrichtung vorteilhafterweise zusätzlich eine weitere Wiegand-Triggereinheit mit einem Wiegand-Draht und einer Sensorspule, die den Wiegand-Draht radial umschließt. Ein erstes Ende der Sensorspule der weiteren Wiegand-Triggereinheit ist mit dem ersten Ende des Triggerelements der Wiegand-Sensoreinheit elektrisch verbunden, und ein zweites Ende der Sensorspule der weiteren Wiegand-Triggereinheit ist mit dem zweiten Ende des Triggerelements der Wiegand-Sensoreinheit elektrisch verbunden, sodass durch in der Sensorspule der weiteren Wiegand-Triggereinheit erzeugte Spannungspulse, analog zur Funktionsweise der (ersten) Wiegand-Triggereinheit, ebenfalls ein auf die mindestens zwei Wiegand-Drähte der Wiegand-Sensoreinheit einwirkendes Triggermagnetfeld erzeugt wird.

Die weitere Wiegand-Triggereinheit ist hierbei derart in der weiteren Bewegungsrichtung versetzt zu der Wiegand-Sensoreinheit angeordnet, dass bei der Bewegung des beweglichen Objekts in der weiteren Bewegungsrichtung eine auf den Wiegand-Draht der weiteren Wiegand-Triggereinheit einwirkende Komponente des Erregermagnetfelds die definierte Triggerfeldstärke erreicht, bevor die auf die mindestens zwei Wiegand-Drähte der Wiegand-Sensoreinheit einwirkende Komponente des Erregermagnetfelds die definierte Triggerfeldstärke erreicht. Hierdurch wird erreicht, dass für beide Bewegungsrichtung jeweils das Triggermagnetfeld und das von dem Erregermagnet erzeugte Erregermagnetfeld im Wesentlichen zeitgleich auf die mindestens zwei Wiegand-Drähte des Wiegand-Sensormoduls einwirken. Beispielsweise kann die weitere Wiegand-Triggereinheit in der weiteren Bewegungsrichtung vor der Wiegand-Sensoreinheit angeordnet sein, oder kann ein Versatz in der weiteren Bewegungsrichtung zwischen der weiteren Wiegand-Triggereinheit und der Wiegand-Sensoreinheit größer sein als ein Versatz in der weiteren Bewegungsrichtung zwischen entsprechenden Erregermagneten der Erregervorrichtung. Bei einer Bewegung in die erste Bewegungsrichtung wird das Triggerelement zur Erzeugung des Triggermagnetfelds durch die in der Sensorspule der (ersten) Wiegand-Triggereinheit erzeugten Spannungspulse bestromt, und bei einer Bewegung in die zweite Bewegungsrichtung wird das Triggerelement zur Erzeugung des Triggermagnetfelds durch die in der Sensorspule der weiteren Wiegand-Triggereinheit erzeugten Spannungspulse bestromt. Dies schafft ein Sensorsystem, das eine zuverlässige Erfassung von Bewegungen des beweglichen Objekts in zwei verschiedene Bewegungsrichtungen ermöglicht.

Verschiedene Ausführungsbeispiele der vorliegenden Erfindung werden nachfolgend anhand der beigefügten Figuren beschrieben. Hierbei zeigt:
Figur 1 einen schematischen Schaltplan eines ersten Ausführungsbeispiels einer erfindungsgemäßen Sensorvorrichtung,
Figur 2 einen schematischen Schaltplan eines zweiten Ausführungsbeispiels einer erfindungsgemäßen Sensorvorrichtung,
Figur 3 einen schematischen Schaltplan eines dritten Ausführungsbeispiels einer erfindungsgemäßen Sensorvorrichtung,
Figur 4 eine schematische Darstellung eines ersten Ausführungsbeispiels eines erfindungsgemäßen magnetbasierten Sensorsystems,
Figur 5 eine schematische Darstellung einer Erregervorrichtung des Sensorsystems aus Figur 4,
Figur 6 eine schematische Darstellung einer Sensorvorrichtung des Sensorsystems aus Figur 4,
Figur 7 einen schematischen Schaltplan der Sensorvorrichtung aus Figur 6, und
Figur 8 eine schematische Darstellung eines zweiten Ausführungsbeispiels eines erfindungsgemäßen magnetbasierten Sensorsystems.

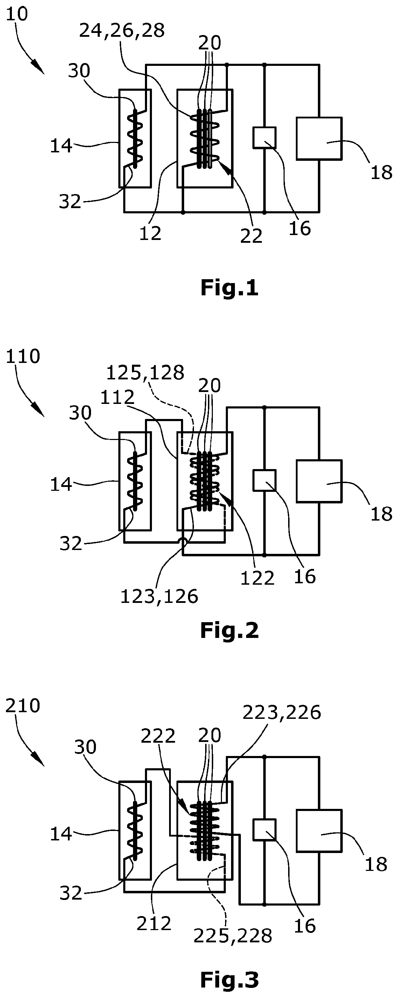

Fig. 1 zeigt eine erfindungsgemäße Sensorvorrichtung 10 zur Erfassung eines Magnetfelds. Die Sensorvorrichtung 10 umfasst eine Wiegand-Sensoreinheit 12, eine Wiegand-Triggereinheit 14, einen Energiespeicher 16 und eine Auswerteeinheit 18.

Die Wiegand-Sensoreinheit 12 umfasst drei Wiegand-Drähte 20 und eine Spulenanordnung 22, die die drei Wiegand-Drähte 20 radial umschließt. Die Spulenanordnung 22 umfasst im vorliegenden Ausführungsbeispiel eine einzige Kombispule 24, die sowohl ein Sensorelement 26 als auch ein Triggerelement 28 der Spulenanordnung 22 bildet. Die Kombispule 24 ist derart ausgebildet, dass einerseits durch Bestromen der Kombispule 24 ein auf die drei Wiegand-Drähte 20 einwirkendes Triggermagnetfeld erzeugt wird, und andererseits durch ein Auslösen der drei Wiegand-Drähte 20 jeweils ein Spannungspuls in der Kombispule 24 erzeugt wird.

Die Wiegand-Triggereinheit 14 umfasst einen einzigen Wiegand-Draht 30 und eine Sensorspule 32, die den Wiegand-Draht 30 umschließt. Die Sensorspule 32 ist derart ausgebildet, dass durch ein Auslösen des Wiegand-Drahts 30 ein Spannungspuls in der Sensorspule 32erzeugt wird. Ein erstes Ende der Sensorspule 32 ist elektrisch mit einem ersten Ende der Kombispule 24 verbunden, und ein zweites Ende der Sensorspule 32 ist elektrisch mit einem zweiten Ende der Kombispule 24 verbunden.

Der Energiespeicher 16 ist derart elektrisch mit dem ersten Ende der Kombispule 24 und mit dem zweiten Ende der Kombispule 24 verbunden, dass elektrische Energie von durch das Auslösen der drei Wiegand-Drähte 20 in der Kombispule 24 erzeugten Spannungspulsen in dem Energiespeicher 16 gespeichert werden kann.

Die Auswerteeinheit 18 ist derart elektrisch mit dem ersten Ende der Kombispule 24 und mit dem zweiten Ende der Kombispule 24 verbunden, dass durch das Auslösen der drei Wiegand-Drähte 20 in der Kombispule 24 erzeugte Spannungspulse von der Auswerteeinheit 18 ausgewertet werden können.

Fig. 2 zeigt eine alternative erfindungsgemäße Sensorvorrichtung 110 zur Erfassung eines Magnetfelds. Die Sensorvorrichtung 110 unterscheidet sich von der Sensorvorrichtung 10 aus Fig. 1 im Wesentlichen dadurch, dass eine Spulenanordnung 122 einer Wiegand-Sensoreinheit 112 der Sensorvorrichtung 110 eine Sensorspule 123 und eine separate Triggerspule 125 umfasst, die ineinander angeordnet sind. Im Speziellen sind die Sensorspule 123 und die Triggerspule 125 derart ausgebildet, dass ihre Wicklungen bezogen auf eine axiale Richtung der Wiegand-Drähte 20 ineinander ausgebildet sind. Die Sensorspule 123 bildet ein Sensorelement 126 der Spulenanordnung 122 und die Triggerspule 125 bildet ein Triggerelement 128 der Spulenanordnung 122. Das erste Ende der Sensorspule 32 der Wiegand-Triggereinheit 14 ist elektrisch mit einem ersten Ende der Triggerspule 125 verbunden, und das zweite Ende der Sensorspule 32 ist elektrisch mit einem zweiten Ende der Triggerspule 125 verbunden. Der Energiespeicher 16 und die Auswerteeinheit 18 der Sensorvorrichtung 110 sind jeweils elektrisch mit dem ersten Ende der Sensorspule 123 und mit dem zweiten Ende der Sensorspule 123 der Wiegand-Sensoreinheit 112 verbunden.

Fig. 3 zeigt eine weitere erfindungsgemäße Sensorvorrichtung 210 zur Erfassung eines Magnetfelds. Die Sensorvorrichtung 210 unterscheidet sich von der Sensorvorrichtung 110 aus Fig. 2 im Wesentlichen dadurch, dass eine Sensorspule 223 und eine Triggerspule 225 einer Spulenanordnung 222 einer Wiegand-Sensoreinheit 212 der Sensorvorrichtung 210 bezogen auf die axiale Richtung der Wiegand-Drähte 20 nebeneinanderliegend angeordnet sind, also verschiedene axiale Abschnitte der Wiegand-Drähte 20 radial umschließen. Die Sensorspule 223 bildet ein Sensorelement 226 der Spulenanordnung 222 und die Triggerspule 225 bildet ein Triggerelement 228 der Spulenanordnung 222. Das erste Ende der Sensorspule 32 der Wiegand-Triggereinheit 14 ist elektrisch mit einem ersten Ende der Triggerspule 225 verbunden, und das zweite Ende der Sensorspule 32 ist elektrisch mit einem zweiten Ende der Triggerspule 225 verbunden. Der Energiespeicher 16 und die Auswerteeinheit 18 der Sensorvorrichtung 210 sind jeweils elektrisch mit dem ersten Ende der Sensorspule 223 und mit dem zweiten Ende der Sensorspule 223 der Wiegand-Sensoreinheit 212 verbunden.

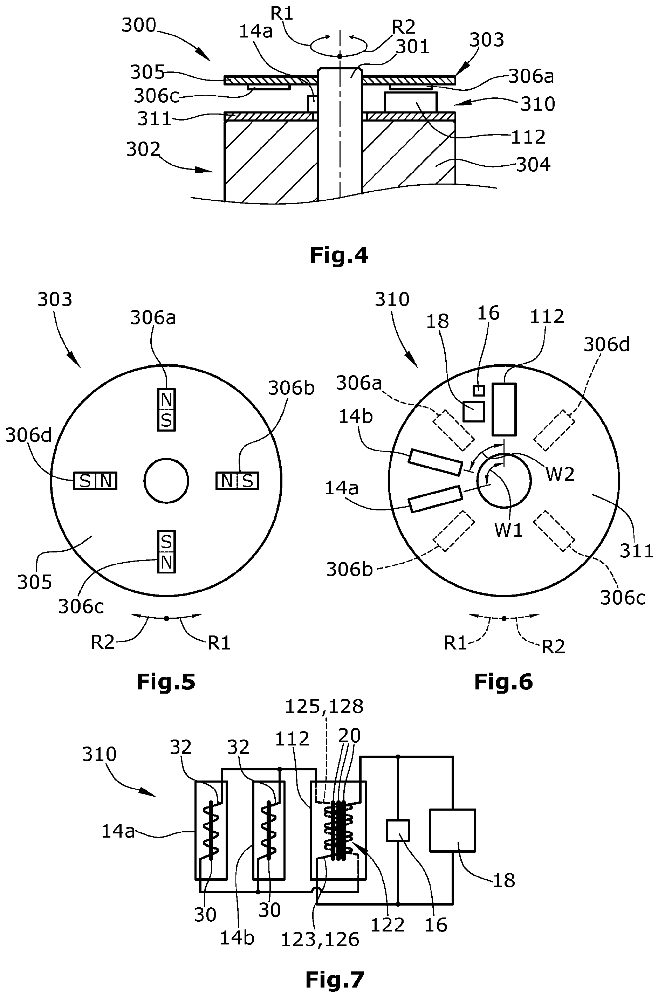

Fig. 4 zeigt ein erfindungsgemäßes magnetbasiertes Sensorsystem 300 zur Erfassung einer Bewegung eines beweglichen Objekts 301 in einer ersten Bewegungsrichtung R1 und einer der ersten Bewegungsrichtung entgegengerichteten zweiten Bewegungsrichtung R2. Hierbei ist das bewegliche Objekt 301 eine Welle eines Elektromotors 302, ist die erste Bewegungsrichtung R1 eine erste Umfangsrichtung der Welle, und ist die zweite Bewegungsrichtung R2 eine zweite Umfangsrichtung der Welle.

Das Sensorsystem 300 umfasst eine Erregervorrichtung 303, die an dem beweglichen Objekt 301 befestigt ist, um sich mit diesem mitzubewegen, und eine Sensorvorrichtung 310, die an einem feststehenden Gehäuseteil 304 des Elektromotors 302 befestigt ist.

Die Erregervorrichtung 303 umfasst ein scheibenförmiges Trägerelement 305, das das bewegliche Objekt 301 radial umschließt und an diesem befestigt ist. Die Erregervorrichtung 303 umfasst vier permanentmagnetische Erregermagnete 306a-d, die auf einer der Sensorvorrichtung 310 zugewandten Oberfläche des Trägerelements 305 angeordnet sind. Die vier Erregermagnete 306a-d sind gleichmäßig entlang des Umfangs des beweglichen Objekts 301 verteilt angeordnet, weisen also jeweils einen Winkelabstand von im Wesentlichen 90° zueinander auf. Die vier Erregermagnete 306a-d sind derart ausgebildet und angeordnet, dass in Umfangsrichtung des beweglichen Objekts 301 nebeneinanderliegende Erregermagnete 306a-d eine im Wesentlichen gegensätzliche Magnetisierung in radialer Richtung des beweglichen Objekts 301 aufweisen, also jeweils unterschiedliche magnetische Polaritäten N,S (N: magnetischer Nordpol, S: magnetischer Südpol) an ihrer radial inneren Seite aufweisen und jeweils unterschiedliche magnetische Polaritäten N,S an ihrer radial äußeren Seite aufweisen. Die Erregermagnete 306a-d erzeugen daher an einer festgelegten Position der Sensorvorrichtung 310 ein Erregermagnetfeld, das sich verändert, im Speziellen alterniert, wenn sich das bewegliche Objekt 301 in der ersten Bewegungsrichtung R1 oder in der zweiten Bewegungsrichtung R2 bewegt.

Die Sensorvorrichtung 310 umfasst eine scheibenförmige Platine 311, die das bewegliche Objekt 301 radial umschließt und an dem Gehäuseteil 304 befestigt ist. Die Sensorvorrichtung umfasst die Wiegand-Sensoreinheit 112 aus Fig. 2, zwei Wiegand-Triggereinheiten 14a,b, die jeweils im Wesentlichen identisch zu der Wiegand-Triggereinheit 14 aus den Fig. 1-3 aufgebaut sind, sowie den Energiespeicher 16 und die Auswerteeinheit 18 aus den Fig. 1-3.

Ein erstes Ende der Sensorspule 32 beider Wiegand-Triggereinheiten 14a,b ist jeweils mit einem ersten Ende der Triggerspule 125 der Wiegand-Sensoreinheit 112 elektrisch verbunden, und ein zweites Ende der Sensorspule 32 beider Wiegand-Triggereinheiten 14a,b ist jeweils mit einem zweiten Ende der Triggerspule 125 der Wiegand-Sensoreinheit 112 elektrisch verbunden.

Die Wiegand-Sensoreinheit 112 und die zwei Wiegand-Triggereinheiten 14a,b sind auf einer der Erregervorrichtung 303 zugewandten Oberfläche der Platine 311 angeordnet. Die erste Wiegand-Triggereinheit 14a ist in einem Winkelabstand W1 von etwas mehr als 90° zu der Wiegand-Sensoreinheit 112 angeordnet, und die zweite Wiegand-Triggereinheit 14b ist in einem Winkelabstand W2 von etwas weniger als 90° zu der Wiegand-Sensoreinheit 112 angeordnet.

Bei einer Bewegung des beweglichen Objekts 301 und folglich der Erregervorrichtung 303 in die erste Bewegungsrichtung R1 passiert daher stets einer der Erregermagnete 306a-d (für die in Fig. 6 dargestellte Lage der zweite Erregermagnet 306b) die erste Wiegand-Triggereinheit 14a, bevor der jeweils in der ersten Bewegungsrichtung R1 benachbarte Erregermagnet 306a-d (für die in Fig. 6 dargestellte Lage der erste Erregermagnet 306a) die Wiegand-Sensoreinheit 112 passiert. Bei der Bewegung des beweglichen Objekts 301 in die erste Bewegungsrichtung R1 erreicht eine auf den Wiegand-Draht 30 der ersten Wiegand-Triggereinheit 14a einwirkende Komponente des Erregermagnetfelds also stets eine definierte Triggerfeldstärke, bevor eine auf die drei Wiegand-Drähte 20 der Wiegand-Sensoreinheit 112 einwirkende Komponente des Erregermagnetfelds die definierte Triggerfeldstärke erreicht.

Bei einer Bewegung des beweglichen Objekts 301 und folglich der Erregervorrichtung 303 in die zweite Bewegungsrichtung R2 passiert analog stets einer der Erregermagnete 306a-d (für die in Fig. 6 dargestellte Lage der erste Erregermagnet 306a) die zweite Wiegand-Triggereinheit 14b, bevor der jeweils in der ersten Bewegungsrichtung R1 benachbarte Erregermagnet 306a-d (für die in Fig. 6 dargestellte Lage der vierte Erregermagnet 306d) die Wiegand-Sensoreinheit 112 passiert. Bei der Bewegung des beweglichen Objekts 301 in die zweite Bewegungsrichtung R2 erreicht die auf den Wiegand-Draht 30 der zweiten Wiegand-Triggereinheit 14b einwirkende Komponente des Erregermagnetfelds also stets die definierte Triggerfeldstärke, bevor die auf die drei Wiegand-Drähte 20 der Wiegand-Sensoreinheit 112 einwirkende Komponente des Erregermagnetfelds die definierte Triggerfeldstärke erreicht.

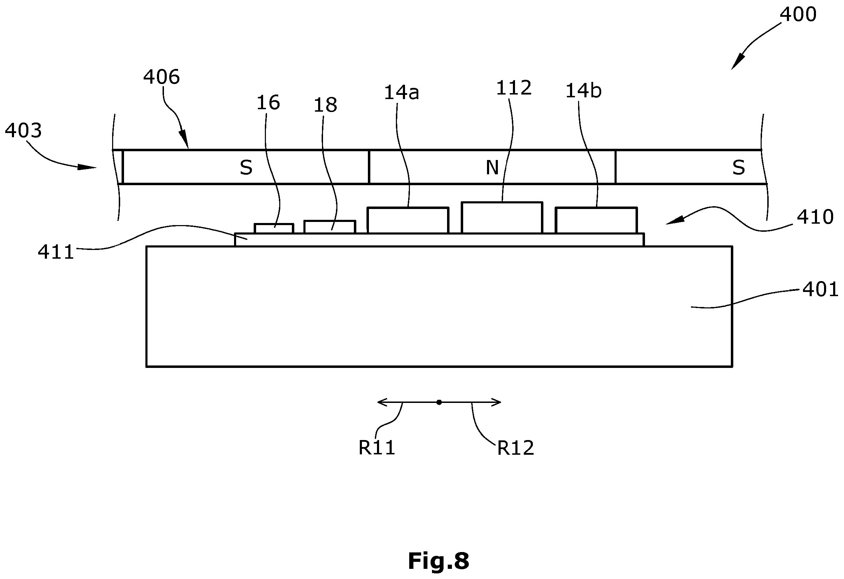

Fig. 8 zeigt ein alternatives erfindungsgemäßes magnetbasiertes Sensorsystem 400 zur Erfassung einer linearen Bewegung eines beweglichen Objekts 401 in einer ersten Bewegungsrichtung R11 und einer der ersten Bewegungsrichtung entgegengerichteten zweiten Bewegungsrichtung R12.

Das Sensorsystem 400 umfasst eine Erregervorrichtung 403 die feststehend angeordnet ist und eine Sensorvorrichtung 410, die an dem beweglichen Objekt 401 befestigt ist, um sich mit diesem mitzubewegen.

Die Erregervorrichtung 403 umfasst einen longitudinalen Erregermagnet 406, der sich im Wesentlichen parallel zur Bewegungsachse des beweglichen Objekts 401 erstreckt und eine abwechselnde Folge von magnetischen Nordpolen N und magnetischen Südpolen S aufweist. Der Erregermagnet 406 kann ein einzelner permanentmagnetisierter Körper sein oder aus mehreren nebeneinander angeordneten Permanentmagneten bestehen. Der Erregermagnet 406 erzeugt an einer festgelegten Position der Sensorvorrichtung 410 ein Erregermagnetfeld, das sich verändert, im Speziellen alterniert, wenn sich das bewegliche Objekt 401 in der ersten Bewegungsrichtung R11 oder in der zweiten Bewegungsrichtung R12 bewegt.

Die Sensorvorrichtung 410 ist im Wesentlichen analog zu der Sensorvorrichtung 310 aus den Fig. 4-7 aufgebaut. Die Sensorvorrichtung 410 unterscheidet sich von der Sensorvorrichtung 310 im Wesentlichen durch die Anordnung der einzelnen Komponenten, im Speziellen der beiden Wiegand-Triggereinheiten 14a,b und der Wiegand-Sensoreinheit 112, auf einer Platine 411. Bei der Sensorvorrichtung 410 ist die erste Wiegand-Triggereinheit 14a in der ersten Bewegungsrichtung R11 unmittelbar vor der Wiegand-Sensoreinheit 112 angeordnet, und die zweite Wiegand-Triggereinheit 14b ist in der zweiten Bewegungsrichtung R12 unmittelbar vor der Wiegand-Sensoreinheit 112 angeordnet.

Folglich passiert bei einer Bewegung des beweglichen Objekts 401 und der Sensorvorrichtung 410 in die erste Bewegungsrichtung R11 stets die erste Wiegand-Triggereinheit 14a Bereiche mit maximalem Erregermagnetfeld, bevor die Wiegand-Sensoreinheit 112 diese passiert, und passiert bei einer Bewegung des beweglichen Objekts 401 und der Sensorvorrichtung 410 in die zweite Bewegungsrichtung R12 stets die zweite Wiegand-Triggereinheit 14b die Bereiche mit maximalem Erregermagnetfeld, bevor die Wiegand-Sensoreinheit 112 diese passiert. Bei der Bewegung des beweglichen Objekts 401 in die erste Bewegungsrichtung R11 erreicht die auf den Wiegand-Draht 30 der ersten Wiegand-Triggereinheit 14a einwirkende Komponente des Erregermagnetfelds also stets die definierte Triggerfeldstärke, bevor die auf die drei Wiegand-Drähte 20 der Wiegand-Sensoreinheit 112 einwirkende Komponente des Erregermagnetfelds die definierte Triggerfeldstärke erreicht, und bei der Bewegung des beweglichen Objekts 401 in die zweite Bewegungsrichtung R12 erreicht die auf den Wiegand-Draht 30 der zweiten Wiegand-Triggereinheit 14b einwirkende Komponente des Erregermagnetfelds also stets die definierte Triggerfeldstärke, bevor die auf die drei Wiegand-Drähte 20 der Wiegand-Sensoreinheit 112 einwirkende Komponente des Erregermagnetfelds die definierte Triggerfeldstärke erreicht.

### Bezugszeichenliste

- 10: Sensorvorrichtung
- 12: Wiegand-Sensoreinheit
- 14: Wiegand-Triggereinheit
- 16: Energiespeicher
- 18: Auswerteeinheit
- 20: Wiegand-Drähte
- 22: Spulenanordnung
- 24: Kombispule
- 26: Sensorelement
- 28: Triggerelement
- 30: Wiegand-Draht
- 32: Sensorspule

- 110: Sensorvorrichtung
- 112: Wiegand-Sensoreinheit
- 122: Spulenanordnung
- 123: Sensorspule
- 125: Triggerspule
- 126: Sensorelement
- 128: Triggerelement

- 210: Sensorvorrichtung
- 212: Wiegand-Sensoreinheit
- 222: Spulenanordnung
- 223: Sensorspule
- 225: Triggerspule
- 226: Sensorelement
- 228: Triggerelement
- 300: Sensorsystem
- 301: bewegliches Objekt
- 302: Elektromotor
- 303: Erregervorrichtung
- 304: Gehäuseteil
- 305: Trägerelement
- 306a-d: Erregermagnete
- 310: Sensorvorrichtung
- 311: Platine
- R1: erste Bewegungsrichtung
- R2: zweite Bewegungsrichtung
- W1: Winkelabstand
- W2: Winkelabstand

- 400: Sensorsystem
- 401: bewegliches Objekt
- 403: Erregervorrichtung
- 406: Erregermagnet
- 410: Sensorvorrichtung
- 411: Platine
- R11: erste Bewegungsrichtung
- R12: zweite Bewegungsrichtung

## Patentansprüche

1. Sensorvorrichtung (10;110;210;310;410) zur Erfassung eines Magnetfelds, mit einer Wiegand-Sensoreinheit (12;112;212) umfassend:
- mindestens zwei Wiegand-Drähte (20) und
- eine Spulenanordnung (22;122;222), die die mindestens zwei Wiegand-Drähte (20) radial umschließt und die
• ein Sensorelement (26;126;226) und
• ein Triggerelement (28;128;228), durch das ein Triggermagnetfeld erzeugbar ist, bildet,
**dadurch gekennzeichnet, dass**
eine Wiegand-Triggereinheit (14;14a) vorhanden ist, umfassend:
- einen Wiegand-Draht (30) und
- eine Sensorspule (32), die den Wiegand-Draht (30) radial umschließt,
wobei ein erstes Ende der Sensorspule (32) der Wiegand-Triggereinheit (14;14a) mit einem ersten Ende des Triggerelements (28;128;228) der Wiegand-Sensoreinheit (12;112;212) elektrisch verbunden ist und ein zweites Ende der Sensorspule (32) der Wiegand-Triggereinheit (14;14a) mit einem zweiten Ende des Triggerelements (28;128;228) der Wiegand-Sensoreinheit (12;112;212) elektrisch verbunden ist.

2. Sensorvorrichtung (110;210;310;410) nach Anspruch 1, wobei die Spulenanordnung (122;222) der Wiegand-Sensoreinheit (112;212) folgendes umfasst:
- eine Sensorspule (123;223), die die mindestens zwei Wiegand-Drähte (20) radial umschließt und das Sensorelement (126;226) bildet, und
- eine separate Triggerspule (125;225), die die mindestens zwei Wiegand-Drähte (20) radial umschließt und das Triggerelement (128;228) bildet.

3. Sensorvorrichtung (210) nach Anspruch 2, wobei die Sensorspule (223) und die Triggerspule (225) der Spulenanordnung (222) der Wiegand-Sensoreinheit (212) bezogen auf eine axiale Richtung der mindestens zwei Wiegand-Drähte (20) der Wiegand-Sensoreinheit (212) nebeneinanderliegend angeordnet sind.

4. Sensorvorrichtung (110;310;410) nach Anspruch 2, wobei die Sensorspule (123) und die Triggerspule (125) der Spulenanordnung (122) der Wiegand-Sensoreinheit (112) ineinander angeordnet sind.

5. Sensorvorrichtung (10) nach Anspruch 1, wobei die Spulenanordnung (22) der Wiegand-Sensoreinheit (12) eine einzige Kombispule (24) umfasst, die die mindestens zwei Wiegand-Drähte (20) radial umschließt und die sowohl das Sensorelement (26) als auch das Triggerelement (28) bildet.

6. Magnetbasiertes Sensorsystem (300;400) zur Erfassung einer Bewegung eines beweglichen Objekts (301;401) in einer Bewegungsrichtung (R1;R11), umfassend:
- eine Erregervorrichtung (303;403) mit mindestens einem Erregermagnet (306a-d;406) zur Erzeugung eines Erregermagnetfelds, und
- einer Sensorvorrichtung (310;410) nach einem der Ansprüche 1 bis 5,
wobei entweder die Erregervorrichtung (303) oder die Sensorvorrichtung (410) eingerichtet ist, mit dem beweglichen Objekt (310;401) verbunden zu werden, um sich mit diesem mitzubewegen, und die jeweils andere eingerichtet ist, feststehend angeordnet zu werden,
wobei die Wiegand-Triggereinheit (14a) und die Wiegand-Sensoreinheit (112) der Sensorvorrichtung (310;410) derart in der Bewegungsrichtung (R1;R11) versetzt zueinander angeordnet sind, dass bei der Bewegung des beweglichen Objekts (301;401) in der Bewegungsrichtung (R1;R11) eine auf den Wiegand-Draht (30) der Wiegand-Triggereinheit (14a) einwirkende Komponente des Erregermagnetfelds eine definierte Triggerfeldstärke erreicht, bevor eine auf die mindestens zwei Wiegand-Drähte (20) der Wiegand-Sensoreinheit (112) einwirkende Komponente des Erregermagnetfelds die definierte Triggerfeldstärke erreicht.

7. Magnetbasiertes Sensorsystem (300;400) nach Anspruch 6 zusätzlich eingerichtet zur Erfassung einer Bewegung des beweglichen Objekts (301;401) in einer weiteren Bewegungsrichtung (R2;R12),
wobei die Sensorvorrichtung (310;410) eine weitere Wiegand-Triggereinheit (14b), mit einem Wiegand-Draht (30) und einer Sensorspule (32), die den Wiegand-Draht (30) radial umschließt, umfasst,
wobei ein erstes Ende der Sensorspule (32) der weiteren Wiegand-Triggereinheit (14b) mit dem ersten Ende des Triggerelements (128) der Wiegand-Sensoreinheit (112) elektrisch verbunden ist und ein zweites Ende der Sensorspule (32) der weiteren Wiegand-Triggereinheit (14b) mit dem zweiten Ende des Triggerelements (128) der Wiegand-Sensoreinheit (112) elektrisch verbunden ist, und
wobei die weitere Wiegand-Triggereinheit (14b) derart in der weiteren Bewegungsrichtung (R1;R11) versetzt zu der Wiegand-Sensoreinheit (112) angeordnet ist, dass bei der Bewegung des beweglichen Objekts (301;401) in der weiteren Bewegungsrichtung (R1;R12) eine auf den Wiegand-Draht (30) der weiteren Wiegand-Triggereinheit (14a) einwirkende Komponente des Erregermagnetfelds die definierte Triggerfeldstärke erreicht, bevor die auf die mindestens zwei Wiegand-Drähte (20) der Wiegand-Sensoreinheit (112) einwirkende Komponente des Erregermagnetfelds die definierte Triggerfeldstärke erreicht.

## Claims

1. Sensor device (10; 110; 210; 310; 410) for detecting a magnetic field, with a Wiegand sensor unit (12; 112; 212) comprising:
- at least two Wiegand wires (20) and
- a coil arrangement (22; 122; 222) which radially surrounds the at least two Wiegand wires (20) and which forms
• a sensor element (26; 126; 226) and
• a trigger element (28; 128; 228) by means of which a trigger magnetic field can be generated,
**characterized in that**
a Wiegand trigger unit (14; 14a) is present, comprising:
- a Wiegand wire (30) and
- a sensor coil (32) which radially surrounds the Wiegand wire (30),
wherein a first end of the sensor coil (32) of the Wiegand trigger unit (14; 14a) is electrically connected to a first end of the trigger element (28; 128; 228) of the Wiegand sensor unit (12; 112; 212), and a second end of the sensor coil (32) of the Wiegand trigger unit (14; 14a) is electrically connected to a second end of the trigger element (28; 128; 228) of the Wiegand sensor unit (12; 112; 212).

2. Sensor device (110; 210; 310; 410) according to claim 1, wherein the coil arrangement (122; 222) of the Wiegand sensor unit (112; 212) comprises:
- a sensor coil (123; 223) which radially surrounds the at least two Wiegand wires (20) and which forms the sensor element (126; 226), and
- a separate trigger coil (125;225) which radially surrounds the at least two Wiegand wires (20) and which forms the trigger element (128;228).

3. Sensor device (210) according to claim 2, wherein the sensor coil (223) and the trigger coil (225) of the coil arrangement (222) of the Wiegand sensor unit (212) are arranged side by side with respect to an axial direction of the at least two Wiegand wires (20) of the Wiegand sensor unit (212).

4. Sensor device (110; 310; 410) according to claim 2, wherein the sensor coil (123) and the trigger coil (125) of the coil arrangement (122) of the Wiegand sensor unit (112) are arranged one inside the other.

5. Sensor device (10) according to claim 1, wherein the coil arrangement (22) of the Wiegand sensor unit (12) comprises one single combined coil (24) which radially surrounds the at least two Wiegand wires (20) and which forms both the sensor element (26) and the trigger element (28).

6. Magnet-based sensor system (300; 400) for detecting a movement of a movable object (301; 401) in a movement direction (R1; R11), comprising:
- an excitation device (303; 403) with at least one excitation magnet (306a-d; 406) for generating an excitation magnetic field, and
- a sensor device (310; 410) according to one of claims 1 to 5,
wherein either the excitation device (303) or the sensor device (410) is configured to be connected to the movable object (310; 401) so as to move with it, and the respective other is configured to be arranged in a stationary manner,
wherein the Wiegand trigger unit (14a) and the Wiegand sensor unit (112) of the sensor device (310; 410) are arranged offset from each other in the movement direction (R1; R11) in such a way that, during the movement of the movable object (301; 401) in the movement direction (R1; R11), a component of the excitation magnetic field which has an effect on the Wiegand wire (30) of the Wiegand trigger unit (14a) reaches a defined trigger field strength before a component of the excitation magnetic field which has an effect on the at least two Wiegand wires (20) of the Wiegand sensor unit (112) reaches the defined trigger field strength.

7. Magnet-based sensor system (300; 400) according to claim 6, additionally configured to detect a movement of the movable object (301; 401) in a further movement direction (R2; R12),
wherein the sensor device (310; 410) comprises a further Wiegand trigger unit (14b), with a Wiegand wire (30) and a sensor coil (32) which radially surrounds the Wiegand wire (30),
wherein a first end of the sensor coil (32) of the further Wiegand trigger unit (14b) is electrically connected to the first end of the trigger element (128) of the Wiegand sensor unit (112), and a second end of the sensor coil (32) of the further Wiegand trigger unit (14b) is electrically connected to the second end of the trigger element (128) of the Wiegand sensor unit (112), and
wherein the further Wiegand trigger unit (14b) is arranged offset from the Wiegand sensor unit (112) in the further movement direction (R1; R11) in such a way that, during the movement of the movable object (301; 401) in the further movement direction (R1; R12), a component of the excitation magnetic field which has an effect on the Wiegand wire (30) of the further Wiegand trigger unit (14a) reaches the defined trigger field strength before the component of the excitation magnetic field which has an effect on the at least two Wiegand wires (20) of the Wiegand sensor unit (112) reaches the defined trigger field strength.

## Revendications

1. Dispositif de détection (10 ; 110 ; 210 ; 310 ; 410) pour la détection d'un champ magnétique, avec une unité de détection Wiegand (12 ; 112 ; 212) comprenant :
- au moins deux fils Wiegand (20) et
- un agencement de bobine (22 ; 122 ; 222), qui entoure radialement les au moins deux fils Wiegand (20) et qui comprend
• un élément de capteur (26 ; 126 ; 226) et
• un élément de déclenchement (28 ; 128 ; 228), par lequel un champ magnétique de déclenchement peut être généré,
**caractérisé en ce que**
une unité de déclenchement Wiegand (14 ; 14a) est présente, comprenant:
- un fil Wiegand (30) et
- une bobine de capteur (32), qui entoure radialement le fil Wiegand (30),
dans lequel une première extrémité de la bobine de capteur (32) de l'unité de déclenchement Wiegand (14 ; 14a) est connectée électriquement à une première extrémité de l'élément de déclenchement (28 ; 128 ; 228) de l'unité de détection Wiegand (12 ; 112 ; 212) et une deuxième extrémité de la bobine de capteur (32) de l'unité de déclenchement Wiegand (14 ; 14a) est connectée électriquement à une deuxième extrémité de l'élément de déclenchement (28 ; 128 ; 228) de l'unité de détection Wiegand (12 ; 112 ; 212).

2. Dispositif de détection (110 ; 210 ; 310 ; 410) selon la revendication 1, dans lequel l'agencement de bobine (122 ; 222) de l'unité de détection Wiegand (112 ; 212) comprend:
- une bobine de capteur (123 ; 223), qui entoure radialement les au moins deux fils Wiegand (20) et qui forme l'élément de détection (126 ; 226), et
- une bobine de déclenchement séparée (125 ; 225), qui entoure radialement les au moins deux fils Wiegand (20) et qui forme l'élément de déclenchement (128 ; 228).

3. Dispositif de détection (210) selon la revendication 2, dans lequel la bobine de capteur (223) et la bobine de déclenchement (225) de l'agencement de bobine (222) de l'unité de détection Wiegand (212) sont disposées côte à côte par rapport à une direction axiale des au moins deux fils Wiegand (20) de l'unité de détection Wiegand (212).

4. Dispositif de détection (110 ; 310 ; 410) selon la revendication 2, dans lequel la bobine de capteur (123) et la bobine de déclenchement (125) de l'agencement de bobine (122) de l'unité de détection Wiegand (112) sont disposées l'une dans l'autre.

5. Dispositif de détection (10) selon la revendication 1, dans lequel l'agencement de bobine (22) de l'unité de détection Wiegand (12) comprend une seule bobine combinée (24), qui entoure radialement les au moins deux fils Wiegand (20) et qui forme à la fois l'élément de capteur (26) et l'élément de déclenchement (28).

6. Système de détection à base magnétique (300 ; 400) pour la détection d'un mouvement d'un objet mobile (301 ; 401) dans une direction de mouvement (R1 ; R11), comprenant :
- un dispositif d'excitation (303 ; 403) avec au moins un aimant d'excitation (306a-d ; 406) pour la génération d'un champ magnétique d'excitation, et
- un dispositif de détection (310 ; 410) selon l'une quelconque des revendications 1 à 5,
dans lequel soit le dispositif d'excitation (303) soit le dispositif de détection (410) est conçu pour être connecté à l'objet mobile (310 ; 401) afin de se déplacer conjointement avec celui-ci, et l'autre est conçu pour être disposé de manière fixe,
dans lequel l'unité de déclenchement Wiegand (14a) et l'unité de détection Wiegand (112) du dispositif de détection (310 ; 410) sont disposées de manière décalée l'une par rapport à l'autre dans la direction de mouvement (R1 ; R11) de telle sorte que lors du mouvement de l'objet mobile (301 ; 401) dans la direction de mouvement (R1 ; R11), une composante du champ magnétique d'excitation agissant sur le fil Wiegand (30) de l'unité de déclenchement Wiegand (14a) atteigne une intensité de champ de déclenchement définie avant qu'une composante du champ magnétique d'excitation agissant sur les au moins deux fils Wiegand (20) de l'unité de détection Wiegand (112) atteigne l'intensité de champ de déclenchement définie.

7. Système de détection à base magnétique (300 ; 400) selon la revendication 6, conçu en outre pour la détection d'un mouvement de l'objet mobile (301 ; 401) dans une autre direction de mouvement (R2 ; R12),
dans lequel le dispositif de détection (310 ; 410) comprend une autre unité de déclenchement Wiegand (14b), avec un fil Wiegand (30) et une bobine de capteur (32), qui entoure radialement le fil Wiegand (30),
dans lequel une première extrémité de la bobine de capteur (32) de l'autre unité de déclenchement Wiegand (14b) est connectée électriquement à la première extrémité de l'élément de déclenchement (128) de l'unité de détection Wiegand (112) et une deuxième extrémité de la bobine de capteur (32) de l'autre unité de déclenchement Wiegand (14b) est connectée électriquement à la deuxième extrémité de l'élément de déclenchement (128) de l'unité de détection Wiegand (112), et
dans lequel l'autre unité de déclenchement Wiegand (14b) est disposée de manière décalée par rapport à l'unité de détection Wiegand (112) dans l'autre direction de mouvement (R1 ; R11) de telle sorte que lors du mouvement de l'objet mobile (301 ; 401) dans l'autre direction de mouvement (R1 ; R12), une composante du champ magnétique d'excitation agissant sur le fil Wiegand (30) de l'autre unité de déclenchement Wiegand (14a) atteigne l'intensité de champ de déclenchement définie avant que la composante du champ magnétique d'excitation agissant sur les au moins deux fils Wiegand (20) de l'unité de détection Wiegand (112) atteigne l'intensité de champ de déclenchement définie.
